# EUROPEAN PATENT APPLICATION

(11) **EP 3 537 300 A1**
(43) Date of publication of application: **11.09.2019**
(21) Application number: 18159884.8
(22) Date of filing: 05.03.2018
(51) Int. Cl.: G06F 11/07

(54) **APPLICATION RECONFIGURATION**

(71) Applicant: British Telecommunications public limited company, London EC1A 7AJ (GB)
(72) Inventor: The designation of the inventor has not yet been filed
(74) Representative: British Telecommunications public limited company Intellectual Property Department

(57) **Abstract**

A computer implemented method of managing an application executing in a virtualised computing environment, the environment including a plurality of computing components each having associated a predetermined required performance characteristic, the method comprising: receiving and recording a series of performance events from the computing components, each performance event indicating an occurrence in the computing component relating to the performance of the component relative to the required performance characteristic of the component; responsive to a failure of a computing component, identifying a series of recorded events for a time window immediately preceding the failure as a pre-failure event set; adjusting a configuration of the virtualised computing environment responsive to the failure; responsive to a detection of a recurrence of the pre-failure event set in the series of performance events occurring subsequent to the adjustment, and further responsive to a recurrence of the failure of the previously failed component, implementing an additional or alternative adjustment of the virtualised computing environment.

## Description

The present invention relates to addressing faults in applications executing in virtualised computing environments by automatic reconfiguration.

Business processes are increasingly deployed as a set of one or more applications deployed to execute in a virtualised computing environment the configuration and nature of which can be changed. Faults occurring in such applications manifest as a failure of one or more components to perform according to a required performance such as a throughput, capacity, responsiveness, effectiveness or other performance indicator.

Resolution of such faults can involve reconfiguration of the virtualised computing environment, infrastructure components operating therein and/or applications operating therewith. Such resolution can be highly resource intensive, require considerable manual intervention and incur downtime of the applications.

There is a need to mitigate these challenges.

The present invention accordingly provides, in a first aspect, a computer implemented method of managing an application executing in a virtualised computing environment, the environment including a plurality of computing components each having associated a predetermined required performance characteristic, the method comprising: receiving and recording a series of performance events from the computing components, each performance event indicating an occurrence in the computing component relating to the performance of the component relative to the required performance characteristic of the component; responsive to a failure of a computing component, identifying a series of recorded events for a time window immediately preceding the failure as a pre-failure event set; adjusting a configuration of the virtualised computing environment responsive to the failure; responsive to a detection of a recurrence of the pre-failure event set in the series of performance events occurring subsequent to the adjustment, and further responsive to a recurrence of the failure of the previously failed component, implementing an additional or alternative adjustment of the virtualised computing environment.

Preferably, adjusting the configuration of the virtualised computing environment includes selecting, from a library of known adjustments, an adjustment suitable for improving the performance of the failed component to operate in accordance with the required performance characteristic.

Preferably the method further comprises, responsive to the recurrence of the failure, indicating the adjustment as ineffective in the library of adjustments.

Preferably the method further comprises, responsive to the detection of a recurrence of the pre-failure event set in the series of performance events occurring subsequent to the adjustment, and further responsive to an absence of recurrence of the failure of the previously failed component at least a predetermined time after the recurrence of the pre-failure event set, indicating the adjustment as effective in the library of adjustments.

Preferably, adjusting the configuration of the virtualised computing environment includes adjusting one or more configuration parameters of one or more components in the virtualised computing environment.

Preferably, the failure of the failed computing component is a failure of the computing component to exhibit the performance characteristic associated with the component.

Preferably, the identified series of events is a subset of all events received in the time window, the subset being selected based on a relevance of the events to failed computing component.

Preferably, the plurality of computing components include one or more of: processor components; storage components; networking components; middleware components; infrastructure components; operating system components; virtual machine manager components; hypervisor components; database components; and application software components.

Preferably, at least a subset of the components are virtualised components.

Preferably, each performance characteristic defines one or more of: a measure of throughput; a measure of utilisation of a capacity; a measure of responsiveness; a measure of effectiveness; and a measure of efficiency.

The present invention accordingly provides, in a second aspect, a computer system including a processor and memory storing computer program code for performing the steps of the method set out above.

The present invention accordingly provides, in a third aspect, a computer program element comprising computer program code to, when loaded into a computer system and executed thereon, cause the computer to perform the steps of the method set out above.

Embodiments of the present invention will now be described, by way of example only, with reference to the accompanying drawings, in which:
Figure 1 is a block diagram a computer system suitable for the operation of embodiments of the present invention;
Figure 2 is a component diagram of an arrangement of a management system for managing an application executing in a virtualised computing environment in accordance with embodiments of the present invention; and
Figure 3 is a flowchart of a method of managing an application executing in a virtualised computing environment in accordance with embodiments of the present invention.

Embodiments of the present invention seek to continuously record performance events for a virtual machine environment over a time window such that, in the event of encountering a fault, sequences of pre-fault performance events are available for storage as a profile of performance occurrences leading up to the fault. The pre-fault profile can be employed to verify the effectiveness of a rectification intervention. The rectification intervention can include a reconfiguration of a virtualised application stack based on either: a known rectification recorded for a statistically similar pre-fault profile; or a new rectification arising from an automatic reconfiguration of discretely defined application and infrastructure parameters. In some embodiments an optimisation function can be employed to identify a suitable parameter set such as a hill-climbing method or the like.

A candidate rectification intervention can be implemented and monitoring continues. The recurrence (or not) of the fault following an observation of the pre-fault profile again in the application is determinate of the effectiveness of the implemented rectification. Where ineffective, an alternative rectification is established.

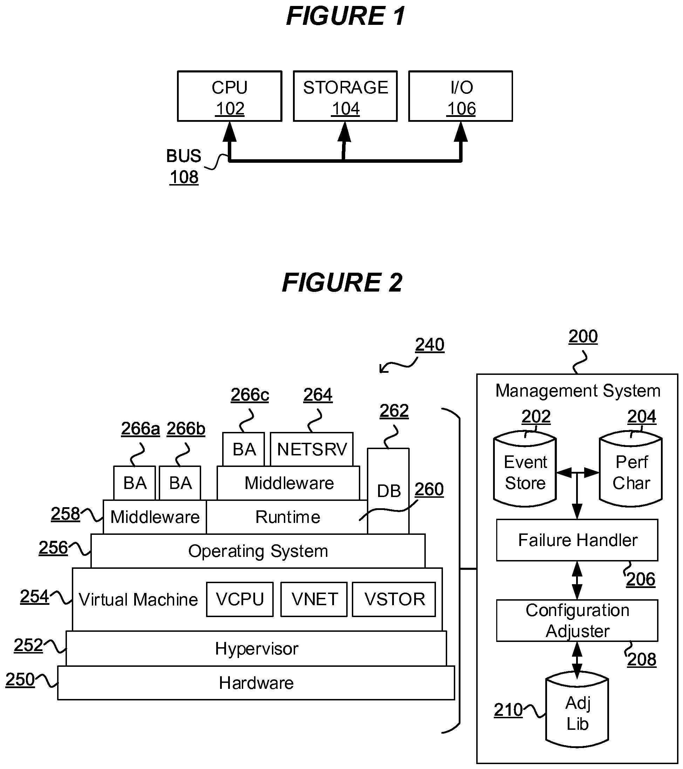

Figure 1 is a block diagram of a computer system suitable for the operation of embodiments of the present invention. A central processor unit (CPU) 102 is communicatively connected to a storage 104 and an input/output (I/O) interface 106 via a data bus 108. The storage 104 can be any read/write storage device such as a random access memory (RAM) or a non-volatile storage device. An example of a non-volatile storage device includes a disk or tape storage device. The I/O interface 106 is an interface to devices for the input or output of data, or for both input and output of data. Examples of I/O devices connectable to I/O interface 106 include a keyboard, a mouse, a display (such as a monitor) and a network connection.

Figure 2 is a component diagram of an arrangement of a management system 200 for managing an application executing in a virtualised computing environment (VCE) 240 in accordance with embodiments of the present invention. The VCE 240 as illustrated in Figure 2 is purely exemplary and it will be understood by those skilled in the art that virtualised computing deployments such as cloud computing deployments, virtual machines and other virtualised systems can be arranged, configured and/or organised in many different ways depending on particular technologies employed, application demands, coexistence of virtualised components and the like. The VCE 240 of Figure 2 includes a hardware platform 250 such as one or more physical computer systems that may be interconnected, coexisting within a single hardware environment or separated by communication means such a physical networking or the like. Executing on the hardware - either directly or via an installed operating system or similar - a virtual machine manager or hypervisor 252 provides virtualisation capabilities for application software. For example, the hypervisor 252 is VMWare. A virtual machine (VM) 254 executes within or in conjunction with the hypervisor 252 and is configured to include virtualised resources and/or one or more virtualised representations of entirely or at least partially physical resources. Such resources include, by way of example only, one or more virtualised processors (VCPU), one or more virtualised network facilities such as network adapters, network connections and the like (VNET), and one or more virtualised storage facilities such as virtual memory, virtual disk or the like (VSTOR). Such components can be described as infrastructure components of the application.

Executing in the VM 254 is an operating system (OS) 256 such as Microsoft Windows, Linux or any suitable operating system. The VM 254 also executes other software that collectively provide services, facilities, libraries and functions for the deployment of the application such as: middleware software 258 including, for example, messaging middleware and/or transaction processing middleware; database software 262 such as a relational database system; runtime software 260 such as a runtime environment for the execution of programs therein; network server software 264 such as a web server; and one or more independent or cooperating business application components 266a to 266c. Each such element described from the hardware 250, hypervisor 252, VM 254, OS 256, middleware 258, runtime 260, database 262, network servers 264 and business application components 266 constitute computing components of the application executing in the VCE 240.

Each computing component in the VCE 240 has associated one or more predefined required performance characteristics. Each performance characteristic for a computing component defines a performance requirement for the component that must be met in order for the component to effectively provide its services, facilities, functions or resources in a manner suitable for the application deployed in the VCE 240. Thus, the performance characteristics are defined based on the required operation of the application. For example, each characteristic can define one or more of, inter alia: a measure of throughput of data, processing, handling or the like of a component; a measure of utilisation of a capacity of a component such as a maximum utilisation of a storage component, a maximum utilisation of a network component, a maximum or minimum utilisation of one or more processor components and the like; a measure of responsiveness of a component such as a maximum time period for a response, for processing or an action of a component; a measure of effectiveness of a component such as an objective measure of a volume, frequency, accuracy or other metric of an output or resource handled, stored or managed by a component; and a measure of efficiency of a component. Notably, in some embodiments the computing components of the VCE 240 include one or more combinations, aggregations or systems of components in the VCE 240 (such as the aggregation of a middleware 258 component and a business application software component 266) and performance characteristics can be associated with such combinations, aggregations or systems.

Computing components in the VCE 240 are further adapted to generate and/or share performance information as performance events indicating an occurrence in the VCE 240 relating to the performance of a component relative to one or more required performance characteristics of the component. The performance events can be generated by individual components themselves, by other components on behalf of a component (such as a consuming component, a measuring component or a performance agent), or by one or more centralised components acting for multiple computing components (such as a performance service operating with the hypervisor 252 or OS 254).

The management system 200 is provided as a hardware, software, firmware or combination component in communication with the VCE 240 either by way of communication with each component of the VCE 240 individually, or with collections of components such as the entire VCE 240. For example, each component individually or collections of components in the VCE 240 may have associated one or more hardware, software, firmware or combination agents for providing communication between and/or on behalf of the components and the management system 200. Additionally, or alternatively, the VCE 240 may have one or more components installed specifically providing the communication between and/or on behalf of the components of the VCE 240 and the management system 200, such as a software component operating with or in the hypervisor 252, the operating system 256 or otherwise in the VCE 240. The communication between the VCE 240 and the management system 200 includes performance events for the computing components in the VCE 240 as described above. The management system 200 receives performance events and records them in an event store 202, such as a database or other suitable data store. The performance events are timestamped and the timestamp is also recorded in the event store 202.

The management system 200 further includes a store 204 of required performance characteristics for computing components as previously described, and a failure handler 206. The failure handler 206 is a hardware, software, firmware or combination component for identifying and responding to a failure of one or more computing components in the VCE 240. A failure of a computing component is a failure of the component to exhibit one or more performance characteristics associated with the component. On detection of a failure in the VCE 240, such as by cross referencing performance events in the event store 202 and the performance characteristics in the store 204, the failure handler 206 identifies a series of recorded performance events in the event store 202 for a time window leading up to, and immediately preceding, the identified failure. These identified performance events in the time window are classified collectively as a pre-failure event set, i.e. a set of performance events occurring in the lead up to the failure. The size of the time window for which the pre-failure event set is defined can be predefined and can be different for different computing components or sets of components. In one embodiment, the size of the time window is adjustable at runtime and/or is configured in accordance with a machine learning algorithm based on a prior history of the effectiveness of time window sizes as training data, such effectiveness being measured with respect to the suitability of the event data within pre-failure event sets of certain time window sizes for providing the requisite information for undertaking the remainder of the process described below.

In one embodiment, the pre-failure event set is a filtered set of events occurring in the time window filtered based on a determination of a relevance of events to the failure. For example, events occurring in the time window that relate directly to one or more failed computing components or components operating directly or indirectly with such failed components may be included in the pre-failure event set and other events not so related may be excluded. Thus, in some embodiments the identified set of events in the pre-failure event set can be a subset of all events received in the time window.

Subsequent to the definition of a pre-failure event set, the failure handler 206 triggers a configuration adjuster 208 as a hardware, software, firmware or combination component adapted to adjust a configuration of the VCE 240. In some embodiments the configuration adjuster 208 is responsive to the failure and is not so triggered.

The configuration adjuster 208 adjusts the configuration of the VCE 240 by undertaking one or more actions in respect of the computing components in the VCE 240 that can include, inter alia: adjusting a configuration of one or more components in the VCE 240 such as one or more configurable parameters, settings, options, libraries, attributes or the like of components; substituting or supplementing a component in the VCE 240 for or with another component; adding one or more additional components in the VCE 240; and other adjustments as will be apparent to those skilled in the art. For example, a performance failure of a business application component 266 reflecting a lack of responsiveness of the component may be met with an adjustment to a configuration of the infrastructure by adjusting the VM 254 to increase a speed or number of virtualised processors and/or an amount of available virtual memory for the VM 254.

In preferred embodiments, two main approaches are adopted by the configuration adjuster 208. In one approach, an adjustment library 210 is provided as a library of adjustments that may be made to the VCE 240 to address specified or generalised failures, such adjustments being predetermined and/or learned. For example, the configuration adjuster 208 can use characteristics or causes (performance event indicators) of a failure to identify a set of one or more suitable adjustments from the adjustment library 210. Most preferably, adjustments in the adjustment library 210 are selected as adjustments determined to be suitable for improving the performance of the failed component(s) top operate in accordance with their associated required performance characteristics.

Alternatively, or additionally, the configuration adjuster 208 can make adjustments to one or more configuration parameters of components in the VCE 240 speculatively, such adjustments being intended to test whether the adjustments work by the remainder of the method in embodiments of the present invention as described below.

The failure handler 206 is further operable to detect a recurrence of a series events corresponding to the events in the pre-failure event set, such an occurrence indicating the lead up to a state in which a component in the VCE 240 is known to have previously failed. This state is therefore informative for the failure handler 206 and, in particular, what happens once this state has been reached is particularly informative of the effectiveness of the adjustment effected by the configuration adjuster 208. Should the reoccurrence of events according to the pre-failure event set be followed at some point thereafter by reoccurrence of the failure then the adjustment can be confirmed to be ineffective or insufficient. On the other hand, should the reoccurrence of events according to the pre-failure event set not be followed at some point (within a predetermined time period) by reoccurrence of the failure, then the adjustment can be judged to have had a positive effect. Indeed, even an increase in a time period after the occurrence of events according to the pre-failure event set can be considered an improvement though not a resolution if the failure ultimately reoccurs. Thus, it can be seen that the pre-failure event set is a valuable tool in determining subsequent configuration adjustment actions and information arising from pre-failure event reoccurrences can be codified in the adjustment library 210 to inform future adjustments.

In particular, where an adjustment is deemed effective or positive, the adjustment can be indicated as such in the adjustment library 210. For example, adjustments in the library 210 can be scored relative to performance characteristics and a score can be increased for deemed effective or positive adjustments so as to increase the likelihood of their selection in future. In contrast, adjustments deemed ineffective or negative can be indicated as such in the adjustment library, such as by way of a reduction to a score. Furthermore, a determination of an ineffective or negatively effective adjustment can trigger, cause or prompt a reprocessing by the configuration adjuster 208 to resolve a new reoccurrence of the failure, such as by selecting a new adjustment from the adjustment library 210 or making a new adjustment to one or more configuration parameters of one or more components in the VCE 240.

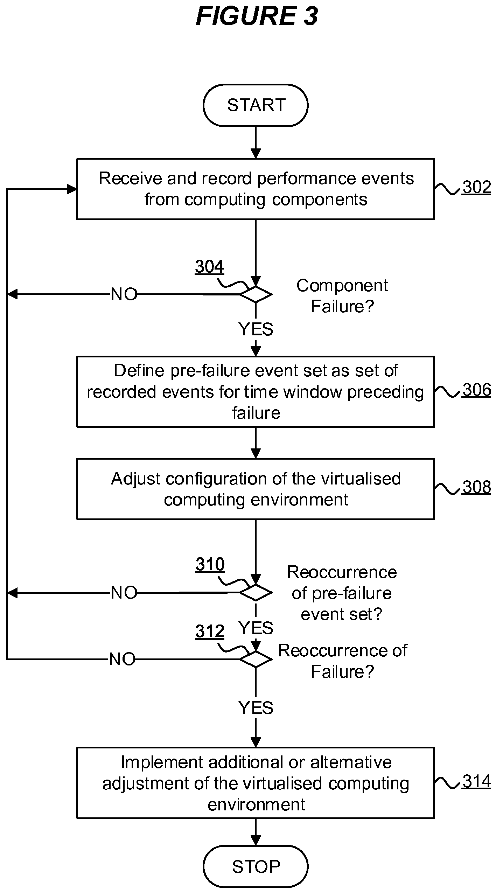

Figure 3 is a flowchart of a method of managing an application executing in a VCE 240 in accordance with embodiments of the present invention. Initially, at step 302, the management system 200 receives and records a series of performance events from the computing components of the VCE 240, each performance event indicating an occurrence in a computing component relating to the performance of the component relative to the required performance characteristic of the component. At step 304 the management system determines if there has been a failure of a computing component. This determination can be made with reference to the events in the event store 202 and the performance characteristics in the store 204. Where there is a detected failure, the management system 200 identifies a series of recorded events for a time window immediately preceding the failure as a pre-failure event set at step 306. At step 308, the management system 200 adjusts a configuration of the VCE 204 responsive to the failure. At step 310 the management system 200 monitors the VCE 240 for a predetermined period of time to identify a reoccurrence of the pre-failure event set. This period of time may span many minutes, hours, days or even weeks depending on the frequency of failure detections in an application. Where no such reoccurrence is observed the method returns to step 302. Where a reoccurrence of events according to the pre-failure event set is observed, the management system 200 determines, at step 312, if there is a reoccurrence of the failure. The management system 200 monitors the VCE 240 for a predetermined period to identify reoccurrence of the failure. If the failure does not reoccur the method returns to step 302, otherwise, on reoccurrence of the failure, the management system implements additional or alternative adjustments of the VCE 240 at step 314.

Insofar as embodiments of the invention described are implementable, at least in part, using a software-controlled programmable processing device, such as a microprocessor, digital signal processor or other processing device, data processing apparatus or system, it will be appreciated that a computer program for configuring a programmable device, apparatus or system to implement the foregoing described methods is envisaged as an aspect of the present invention. The computer program may be embodied as source code or undergo compilation for implementation on a processing device, apparatus or system or may be embodied as object code, for example.

Suitably, the computer program is stored on a carrier medium in machine or device readable form, for example in solid-state memory, magnetic memory such as disk or tape, optically or magneto-optically readable memory such as compact disk or digital versatile disk etc., and the processing device utilises the program or a part thereof to configure it for operation. The computer program may be supplied from a remote source embodied in a communications medium such as an electronic signal, radio frequency carrier wave or optical carrier wave. Such carrier media are also envisaged as aspects of the present invention. It will be understood by those skilled in the art that, although the present invention has been described in relation to the above described example embodiments, the invention is not limited thereto and that there are many possible variations and modifications which fall within the scope of the invention. The scope of the present invention includes any novel features or combination of features disclosed herein. The applicant hereby gives notice that new claims may be formulated to such features or combination of features during prosecution of this application or of any such further applications derived therefrom. In particular, with reference to the appended claims, features from dependent claims may be combined with those of the independent claims and features from respective independent claims may be combined in any appropriate manner and not merely in the specific combinations enumerated in the claims.

## Claims

1. A computer implemented method of managing an application executing in a virtualised computing environment, the environment including a plurality of computing components each having associated a predetermined required performance characteristic, the method comprising:
receiving and recording a series of performance events from the computing components, each performance event indicating an occurrence in the computing component relating to the performance of the component relative to the required performance characteristic of the component;
responsive to a failure of a computing component, identifying a series of recorded events for a time window immediately preceding the failure as a pre-failure event set;
adjusting a configuration of the virtualised computing environment responsive to the failure;
responsive to a detection of a recurrence of the pre-failure event set in the series of performance events occurring subsequent to the adjustment, and further responsive to a recurrence of the failure of the previously failed component, implementing an additional or alternative adjustment of the virtualised computing environment.

2. The method of claim 1 wherein adjusting the configuration of the virtualised computing environment includes selecting, from a library of known adjustments, an adjustment suitable for improving the performance of the failed component to operate in accordance with the required performance characteristic.

3. The method of claim 2 further comprising, responsive to the recurrence of the failure, indicating the adjustment as ineffective in the library of adjustments.

4. The method of claim 2 or 3 further comprising, responsive to the detection of a recurrence of the pre-failure event set in the series of performance events occurring subsequent to the adjustment, and further responsive to an absence of recurrence of the failure of the previously failed component at least a predetermined time after the recurrence of the pre-failure event set, indicating the adjustment as effective in the library of adjustments.

5. The method of any preceding claim wherein adjusting the configuration of the virtualised computing environment includes adjusting one or more configuration parameters of one or more components in the virtualised computing environment.

6. The method of any preceding claim wherein the failure of the failed computing component is a failure of the computing component to exhibit the performance characteristic associated with the component.

7. The method of any preceding claim wherein the identified series of events is a subset of all events received in the time window, the subset being selected based on a relevance of the events to failed computing component.

8. The method of any preceding claim wherein the plurality of computing components include one or more of: processor components; storage components; networking components; middleware components; infrastructure components; operating system components; virtual machine manager components; hypervisor components; database components; and application software components.

9. The method of any preceding claim wherein at least a subset of the components are virtualised components.

10. The method of any preceding claim wherein each performance characteristic defines one or more of: a measure of throughput; a measure of utilisation of a capacity; a measure of responsiveness; a measure of effectiveness; and a measure of efficiency.

11. A computer system including a processor and memory storing computer program code for performing the steps of any preceding claim.

12. A computer program element comprising computer program code to, when loaded into a computer system and executed thereon, cause the computer to perform the steps of a method as claimed in any of claims 1 to 10.
